Europäisches Patentamt

(19) European Patent Office

Office européen des brevets

(11) Numéro de publication : **0 319 088 B1**

(12) **FASCICULE DE BREVET EUROPEEN**

(45) Date de publication du fascicule du brevet :
04.09.91 Bulletin 91/36

(51) Int. Cl.⁵ : **B29D 30/42, B29C 45/14**

(21) Numéro de dépôt : **88202689.1**

(22) Date de dépôt : **25.11.88**

(54) **Procédé pour raccorder les bords d'un tissu caoutchouté, destiné à la fabrication de pneus.**

(30) Priorité : **03.12.87 FR 8716946**

(43) Date de publication de la demande :
**07.06.89 Bulletin 89/23**

(45) Mention de la délivrance du brevet :
**04.09.91 Bulletin 91/36**

(84) Etats contractants désignés :
**AT BE CH DE ES FR GB GR IT LI LU NL SE**

(56) Documents cités :
**DE-A- 2 504 181**
**FR-A- 2 152 742**
**FR-A- 2 207 010**

(73) Titulaire : **COMPAGNIE GENERALE DES ETABLISSEMENTS MICHELIN-MICHELIN & CIE**
**4, rue du Terrail**
**F-63000 Clermont-Ferrand (FR)**

(72) Inventeur : **Aupic, Bernard**
**89, rue des Chambrettes**
**F-63000 Clermont-Ferrand (FR)**
Inventeur : **Tardivat, Jean-Claude**
**35, rue Gilbert Romme**
**F-63000 Clermont-Ferrand (FR)**

(74) Mandataire : **Renaudie, Jacques et al**
**Michelin & Cie Service K. Brevets**
**F-63040 Clermont-Ferrand Cédex (FR)**

Jouve, 18, rue Saint-Denis, 75001 PARIS

## Description

La présente invention concerne un procédé destiné à raccorder les bords de tissus ou nappes de renforcement caoutchoutés. Ces tissus ou nappes sont couramment employés dans l'industrie du pneumatique, où ils sont à la base de la fabrication des armatures de renforcement. L'invention concerne également un pneumatique radial dont l'armature de carcasse est réalisée à partir d'une telle nappe de renforcement.

Ces tissus sont généralement obtenus par enrobage ou calandrage d'une série d'éléments de renforcements parallèles entre eux, tels que fils ou câbles, au moyen de couches de mélanges de caoutchouc non vulcanisé. Comme connu, un mélange comprend l'élastomère, les charges renforçantes, les agents de vulcanisation et tous les additifs nécessaires pour lui conférer les propriétés requises aussi bien à l'état non vulcanisé qu'à l'état vulcanisé.

En vue de la fabrication d'une armature de carcasse, en particulier d'une armature de carcasse à éléments de renforcement radiaux, ces tissus sont découpés sous forme de rectangles, perpendiculairement aux éléments de renforcement. Ces rectangles de tissu doivent alors être assemblés les uns aux autres au moyen d'un joint ou soudure permettant de relier les deux bords du tissu, parallèlement aux éléments de renforcement.

Deux types de joint sont couramment employés, que ce soit lors de la préparation de rouleau de tissu ou lors de la confection de l'armature de carcasse sur un noyau cylindrique : le joint dit à recouvrement et le joint dit bout à bout.

Comme son nom l'indique, la technique du joint à recouvrement consiste à recouvrir un bord de la nappe par l'autre bord suivant une certaine distance, et à assurer la liaison par application d'une pression. Ce type de soudure est de manière générale plus particulièrement employé lorsque le tissu est renforcé par des fils ou câbles textiles, et présente une grande solidité, due à la grande surface d'adhésion entre les parties de recouvrement.

Présentant une double épaisseur de tissu sur une certaine distance circonférentielle, cette soudure par recouvrement n'est pas sans inconvénients. Dans le cas d'une armature de carcasse, le nombre d'éléments de renforcement est multiplié par deux sur la partie méridienne occupée par le joint ; sous l'effet de la pression de gonflage, l'allongement des éléments de renforcement du joint est deux fois moindre comparativement à l'allongement de tous les autres éléments de renforcement de l'armature. Il en résulte un manque d'uniformité des parois du pneumatique fabriqué et plus particulièrement des flancs du pneumatique lorsqu'il s'agit d'un pneumatique à armature de carcasse radiale et à armature de sommet. Ce manque d'uniformité est très nuisible à l'aspect extérieur du pneumatique, mais aussi à la régularité du roulage.

La soudure bout à bout des bords d'une nappe élimine les inconvénients cités ci-dessus, mais donne lieu à d'autres inconvénients non moins importants. Cette liaison repose exclusivement sur la seule adhésivité de deux infimes portions de mélange non vulcanisé, qui est le mélange d'enrobage des éléments de renforcement, et malgré les coûteuses précautions prises pour réaliser cette jonction, elle est peu robuste et donne parfois naissance à des faiblesses notoires lors de la transformation de l'ébauche cylindrique de l'armature en ébauche toroïdale. Non seulement au niveau de la soudure, l'écart entre les deux câbles des bords du tissu est aléatoire, mais des ruptures du pont de gomme entre lesdits deux câbles se produisent, en particulier dans les zones de plus grand développement circonférentiel.

De telles irrégularités conduisent, malgré la mise au rebut des ébauches crues non conformes, à des faiblesses de l'armature de carcasse vis-à-vis de la résistance à la fatigue en roulage, particulièrement au niveau de la partie supérieure des flancs.

Un certain nombre de solutions ont été proposées soit pour améliorer les soudures par recouvrement, soit pour améliorer les soudures bout à bout. Le brevet US 4466473 décrit un procédé de fabrication d'armature de carcasse radiale qui consiste à munir l'une des bords du tissu utilisé de fentes perpendiculaires à la direction des fils ou câbles de renforcement, ce bord étant ensuite recouvert par l'autre bord pour former le joint par recouvrement. Un tel procédé permet ainsi de fabriquer un pneumatique ne présentant pas d'irrégularités sur les flancs.

Un procédé selon le préambule de la revendication 1 appartient à l'état de la technique. Le brevet FR 2389483 concerne un procédé de fabrication d'une armature de carcasse où les deux bords du tissu sont joints bout à bout sur le tambour cylindrique de confection. L'amélioration de la tenue de cette soudure est obtenue par son recouvrement au moyen d'une bande de fils de faible résistance à la traction et de faible module d'élasticité enrobés dans un mélange caoutchouteux, ces fils étant orientés perpendiculairement aux éléments de renforcement du tissu que sont les fils de chaîne. Un tel procédé présente l'inconvénient d'introduire dans l'armature de carcasse un tissu caoutchouté supplémentaire de fabrication coûteuse.

Le but de l'invention est de réaliser une liaison bout à bout entre les bords d'un tissu, robuste, de prix de revient minime et procurant sur le pneumatique terminé et vulcanisé un aspect extérieur des flancs correct tout en permettant une excellente endurance à la fatigue de l'armature de carcasse.

Le procédé pour raccorder bout à bout et parallèlement aux éléments de renforcement les bords d'un tissu destiné à la fabrication d'une armature de carcasse radiale et formé de fils ou câbles enrobés dans un mélange de caoutchouc, ces fils ou câbles étant parallèles entre eux et distants d'un pas p, est caractérisé en ce que l'on pose le tissu sur un support tel que la distance d séparant les deux fils ou câbles des bords du tissu soit comprise entre 1,5 p et 1,5 $\tau p$, $\tau$ étant le plus petit taux de conformation des armatures de carcasse radiale réalisables à partir dudit tissu, et en ce que, dans l'intervalle ainsi créé, on injecte sous une pression au moins égale à 5 bars un mélange de caoutchouc non vulcanisé, porté à une température d'au moins 70°C et présentant une viscosité Mooney $V_2$ au moins égale à 1,2 fois la viscosité Mooney $V_1$ du mélange d'enrobage des éléments de renforcement du tissu et un module d'élasticité $m_2$ au moins égale à 1,5 fois le module d'élasticité $m_1$ du mélange d'enrobage.

La distance d séparant les deux fils ou câbles des bords est mesurée entre les axes de symétrie des deux éléments de renforcement. Il en est de même de la distance p.

Le mélange rapporté entre les deux bordures du tissu à raccorder à une cohésion à cru très supérieure à celle du mélange d'enrobage des fils ou câbles du tissu. Cette cohésion à cru est mesurée d'une part par la viscosité Mooney suivant la méthode normalisée ASTM D1646, d'autre part par le module d'élasticité à l'état non vulcanisé à une température, dite ambiante, de 23°C et pour un allongement relatif de 500%. Comme connu, le module d'élasticité se déduit de la courbe, force de traction F imposée à une éprouvette de section $S_0$ en fonction de l'allongement relatif $\varepsilon$. Le module est alors égal à $F/S_0.1/\varepsilon$.

Il est aussi connu que le taux de conformation d'une armature de carcasse radiale en un point donné de son profil méridien est égal au rapport du rayon R du point considéré dudit profil du pneumatique conformé et vulcanisé sur le rayon $R_0$ du même point sur le profil non conformé, R et $R_0$ étant mesurés par rapport à l'axe de rotation du pneumatique. Dans le cas présent, le taux de conformation correspond au point d'intersection du profil méridien de l'armature de carcasse avec le plan équatorial, c'est-à-dire le point de rayon R maximum de l'armature de carcasse considérée dans le moule de vulcanisation du pneumatique.

Un tissu formé de fils ou câbles enrobés peut être utilisé pour la fabrication d'une seule armature de carcasse. La distance d est alors choisie de manière à être comprise entre 1,5 p et 1,5 $\tau_1 p$, $\tau_1$ étant le taux de conformation de l'armature de carcasse réalisable à partir dudit tissu de pas p.

Les armatures de carcasse réalisables à partir du tissu de pas p, renforcent ainsi plusieurs pneumatiques différenciables par leurs dimensions (hauteur sur jante, largeur axiale maximale, rapport de la hauteur sur la largeur) et/ou par leur type (HR, SR, VR) et/ou par la configuration extérieure de leur bande de roulement.

Quel que soit le pneumatique, son armature de carcasse présente au niveau des tringles une distance entre câbles qui n'est pas constante circonférentiellement. Au niveau d'une soudure, cette distance d est au moins égale à 1,5 fois la distance séparant les autres câbles. Afin de minimiser les effets de cette différence d'écart entre câbles sur la résistance à la fatigue de l'armature de carcasse, il est avantageux que le mélange de soudure présente à l'état vulcanisé un module d'élasticité supérieur au module du mélange d'enrobage.

En conséquence, la présente invention concerne aussi un pneumatique ayant deux flancs réunis par une bande de roulement, une armature de sommet et une armature de carcasse, ancrée à au moins une tringle dans chaque bourrelet et formée d'au moins une nappe de fils ou câbles faisant avec la direction circonférentielle un angle de $90 \pm 10°$, chaque nappe présentant une ou plusieurs soudures bout à bout parallèlement aux éléments de renforcement, caractérisé en ce que les deux fils ou câbles entre lesquels est réalisée une soudure, sont distants d'une distance d, mesurée au niveau des tringles au moins égale à 1,5 fois la distance p séparant les autres fils ou câbles, et en ce que le mélange de caoutchouc, inséré entre les deux fils ou câbles de soudure à un module d'élasticité $M_2$ supérieur au module d'élasticité $M_1$ du mélange d'enrobage des fils ou câbles.

Le module d'élasticité à l'état vulcanisé a la même définition que le module à l'état non vulcanisé. Il est mesuré pour un allongement relatif de 25%.

De manière préférentielle, le mélange de soudure, ayant une composition chimique différente du mélange d'enrobage, a un module d'élasticité $M_2$ au moins égal à 1,2 fois le module $M_1$ du mélange d'enrobage.

L'invention sera décrite en détail en regard du dessin annexé à titre d'exemple nullement limitatif et sur lequel
— la figure 1 est une vue en coupe, perpendiculairement aux éléments de renforcement du tissu, de deux bords de tissu caoutchouté raccordés bout à bout conformément à l'invention,
— la figure 2 est une vue en coupe longitudinale d'un pneumatique moulé comportant une armature de carcasse obtenue par le procédé de l'invention.

Le tissu caoutchouté (1) est formé d'éléments de renforcement (2), qui sont des câbles 184/2 (2 filés de 184 tex) de rayonne, au nombre de 126 câbles par décimètre mesuré perpendiculairement aux câbles. Le pas entre deux câbles est alors égal à 0,79 mm. Ces câbles sont enrobés dans un mélange (3) à base de caoutchouc naturel dont la viscosité Mooney est égal à 60 et dont le module d'élasticité à cru pour un allongement relatif de 500% est égal à 0,08 MPa.

Le tissu (1) est posé sur une table de travail T de façon à ce que les éléments de renforcement extrêmes (21) des deux bords de tissu destinés à être raccordés soient parallèles entre eux et distants de la distance d sensiblement égale à 1,60 mm, ce qui correspond à une valeur voisine de 2 p. Dans l'intervalle (e) est injecté sous une pression de 7 bars et à une température de 80°C le mélange de caoutchouc (4) dont la viscosité Mooney est égale à 90 et dont le module d'élasticité pour le même allongement relatif est égal à 0,19 MPa.

L'injection se réalise, comme connu, à l'aide d'une seringue d'injection ou d'une microboudineuse, montée sur un support permettant le déplacement le long de l'intervalle (e). Ce support comprend aussi un cylindre ou galet presseur destiné, comme son nom l'indique, à parfaire la régularité de la soudure par rouletage sous pression.

Il est entendu que le raccordement des deux bords peut être réalisé sur un noyau cylindrique destiné à mettre en forme une armature de carcasse radiale et autour duquel aura été préalablement disposé une couche de mélange caoutchouteux destinée a former la couche interne du pneumatique.

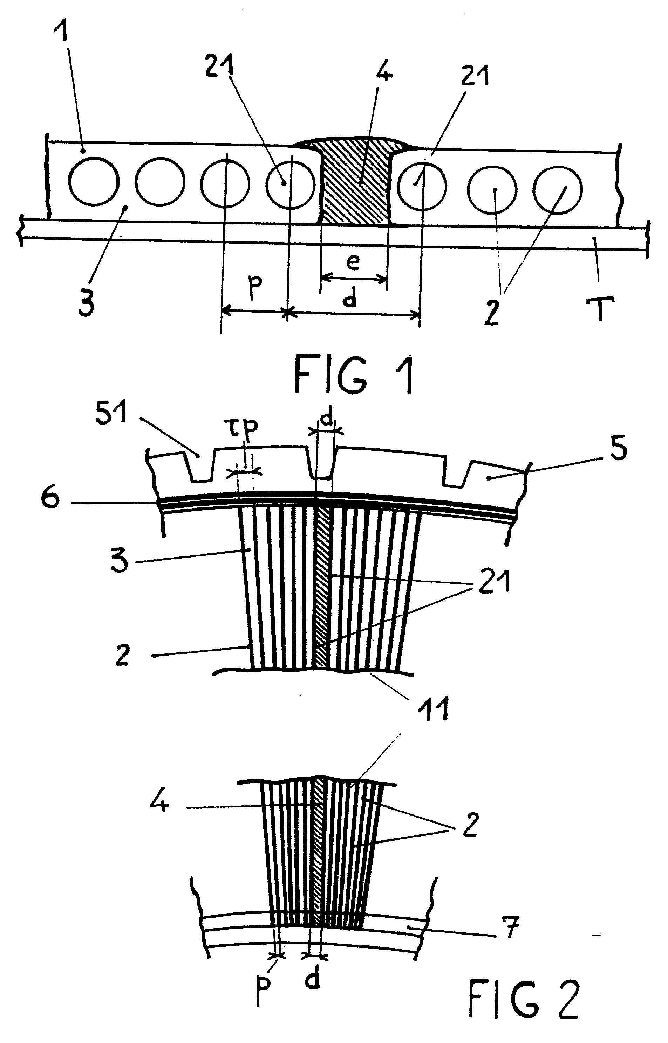

Le pneumatique 155-13 MX, montré sur la figure 2, comprend une bande de roulement (5) munie de rainures (51) une armature de sommet (6) formée de deux nappes de câbles métalliques croisés d'une nappe à la suivante et formant avec la direction circonférentielle un angle inférieur à 25°, une tringle (7) dans chaque bourrelet et une armature de carcasse radiale (11) formée d'une seule nappe de tissu (1).

Au niveau des tringles (7), les câbles (2) du tissu (1) sont distants l'un de l'autre d'une valeur p sensiblement égale à 0,79 mm, alors que les câbles (21) de soudure sont distants d'une valeur d sensiblement égale à 1,60 mm. Le taux de conformation de l'armature de carcasse (11) utilisée étant de 1,71, la distance entre deux câbles normaux (2) mesurée au niveau du plan équatorial est alors égale à 1,71 × 0,79 = 1,35 mm et la distance d entre deux câbles de soudure (21) reste pratiquement constante et sensiblement égale à 1,60 mm, étant donné les caractéristiques à cru du mélange de soudure (4) utilisé comparativement aux caractéristiques du mélange d'enrobage (3). Quant au module d'élasticité sous tension du mélange de soudure (4), il est égal à 8,2 MPa et celui du mélange (3) égal à 2,4 MPa.

**Revendications**

1. Procédé pour raccorder bout à bout et parallèlement aux éléments de renforcement (2) les bords d'un tissu (1) destiné à la fabrication d'une armature de carcasse radiale (11) et formé de fils ou câbles (2) enrobés dans un mélange de caoutchouc (3), ces fils ou câbles (2) étant parallèles entre eux et distants d'un pas p, est caractérisé en ce que l'on pose le tissu (1) sur un support (T) tel que la distance d séparant les deux fils ou câbles (21) des bords du tissu (1) soit comprise entre 1,5 p et 1,5 $\tau$p, $\tau$ étant le plus petit taux de conformation des armatures de carcasse radiales (11) réalisables à partir dudit tissu (1), et en ce que dans l'intervalle (e) entre les deux bords du tissu (1) ainsi créé on injecte sous une pression au moins égale à 5 bars un mélange de caoutchouc (4) non vulcanisé, porté à une température d'au moins 70°C et présentant une viscosité Mooney $V_2$ au moins égale à 1,2 fois la viscosité Mooney $V_1$ du mélange d'enrobage (3) des éléments de renforcement (2) du tissu (1) et un modèle d'élasticité $m_2$ au moins égale à 1,5 fois le module d'élasticité $m_1$ du mélange d'enrobage (3).

2. Pneumatique ayant deux flancs réunis par une bande de roulement (5), une armature de sommet (6) et une armature de carcasse (11), ancrée à au moins une tringle (7) dans chaque bourrelet et formée d'au moins une nappe de fils ou câbles (2) faisant avec la direction circonférentielle un angle de 90° ± 10°, chaque nappe présentant une ou plusieurs soudures bout à bout parallèlement aux éléments de renforcement (2), caractérisé en ce que les deux fils ou câbles (21) entre lesquels est réalisée une soudure, sont distants d'une distance d, mesurée au niveau des tringles (7), au moins égale à 1,5 fois la distance p séparant les autres fils ou câbles (2), et en ce que le mélange de caoutchouc (4), inséré entre les deux bords des nappes, a un module d'élasticité $M_2$ supérieur au module d'élasticité $M_1$ du mélange d'enrobage (3) des fils ou câbles.

**Claims**

1. A process for butting together, parallel to the reinforcement elements (2), the edges of a fabric (1) intended for the manufacture of a radial carcass reinforcement (11) and formed of cords or cables (2) embedded in a rubber mix (3), these cords or cables (2) being parallel to each other and spaced apart by a pitch p, characterized by the fact that the fabric (1) is placed on a support (T) such that the distance d between the two cords or cables (21) of the edges of the fabric (1) is between 1.5 p and 1.5 $\tau$p, $\tau$ being the smallest shaping ratio of the radial carcass reinforcements (11) which can be made from said fabric (1), and by the fact that an unvulcanized rubber mix (4), brought to a temperature of at least 70°C and having a Mooney viscosity $V_2$ at least equal to 1.2 times the Mooney viscosity $V_1$ of the coating mix (3) of the reinforcement elements (2) of the fabric (1) and a modulus of elasticity $m_2$ at least equal to 1.5 times the modulus of elasticity $m_1$ of the coating mix (3), is injected under a pressure of at least 5 bars into the space (e) thus created.

2. A tyre having two side walls connected by a tread (5), a tread reinforcement (6) and a carcass reinforcement (11) anchored to at least one bead ring (7) in each bead and formed of at least one ply of cords or cables (2) forming an angle of 90 ± 10° with circumferential direction, each ply having one or more butt welds parallel to the reinforcement elements (2), characterized by the fact that the two cords or cables (21) between which a welding is effected are spaced apart by a distance d, measured at the level of the bead wires (7), at least equal to 1.5 times the distance p between the other cords or cables (2), and by the fact that the rubber mix (4) inserted between the two ply edges has a modulus of elasticity $M_2$ greater than the modulus of elasticity $M_1$ of the rubber mix (3) of the cords or cables.

## Patentansprüche

1. Verfahren, um die Ränder eines Gewebes (1) aneinander und parallel zu den Verstärkungselementen (2) zu verbinden, wobei das Gewebe dazu bestimmt ist, bei der Herstellung einer Radialkarkassenarmatur (11) verwendet zu werden und aus Fäden oder Kabeln (2) gebildet wird, die von einer Kautschukmischung (3) umhüllt sind, die Fäden oder Kabel (2) sind zueinander parallel und weisen einen Abstand p auf, dadurch gekennzeichnet, daß man das Gewebe (1) auf einem Träger (T) so auflegt, daß der Abstand d, der die beiden Fäden oder Kabeln (21) am Rand des Gewebes (1) trennt, zwischen 1.5 p und 1,5 τp liegt, wobei τ der kleinste Bombierungsfaktor der Radialkarkassenarmaturen (11) ist, die, ausgehend von diesem Gewebe (1) herstellbar sind, und dadurch, daß im Intervall (e), das so zwischen den Rändern des Gewebes (1) gebildet wird, unter einem Druck von zumindest gleich 5 bar, eine nicht-vulkanisierte Kautschukmischung (4), die eine Temperatur von zumindest 70°C aufweist und eine Mooney Viskosität $V_2$ besitzt, die zumindest gleich ist dem 1,2-fachen der Mooney Viskosität $V_1$ der Mischung (3), die die Verstärkungselemente (2) des Gewebes (1) umhüllt und einen Elastizitätsmodul $m_2$, der zumindest gleich ist dem 1,5-fachen des Elastizitätsmoduls $m_1$ der Hüllmischung (3) injiziert wird.

2. Luftreifen mit zwei Flanken, die durch eine Lauffläche (5) verbunden sind, mit einer Scheitelarmatur (6) und einer Karkassenarmatur (11), die auf zumindest einem Kern (7) in jedem Wulst verankert ist und von zumindest einer Lage von Fäden oder Kabeln (2) gebildet wird, die mit der Umfangsrichtung einen Winkel von 90°+/–10° einschließen, wobei jede Lage eine oder mehrere Stoß an Stoß Schweißstellen parallel zu den Verstärkungselementen (2) aufweist, dadurch gekennzeichnet, daß die beiden Fäden oder Kabeln (21) zwischen denen eine Schweißung durchgeführt wird, einen Abstand d voneinander aufweisen, der, gemessen im Bereich der Wulstkerne (7), zumindest gleich ist dem 1,5-fachen des Abstandes p, der die anderen Fäden oder Kabel (2) trennt und dadurch, daß die zwischen die beiden Ränder der Lage eingebrachte Kautschukmischung (4) einen Elastizitätsmodul $M_2$ aufweist, der größer ist als der Elastizitätsmodul $M_1$ der Hüllmischung (3) der Fäden oder Kabel.

FIG 1

FIG 2